# DEMANDE DE BREVET EUROPEEN

(11) **EP 4 012 235 A1**
(43) Date de publication de la demande: **15.06.2022**
(21) Numéro de dépôt: 21214130.3
(22) Date de dépôt: 13.12.2021
(51) Int. Cl.: F16K 11/02, F16K 31/00, G12B 1/02, F28D 21/00, F24D 17/00

(54) **DISPOSITIFS ET SYSTÈMES PASSIFS DE DISCRIMINATION DE LIQUIDE SELON LA TEMPÉRATURE**

(30) Priorité: 11.12.2020 FR 2013076
(71) Demandeur: Traby, Denis, 31350 Boulogne sur Gesse (FR)
(72) Inventeur: Traby, Denis, 31350 Boulogne sur Gesse (FR)
(74) Mandataire: A.P.I. Conseil

(57) **Abrégé**

L'invention concerne un dispositif passif (100) et un système passif (300) pour la discrimination de liquide selon la température.

L'un des objectifs de cette invention est d'améliorer l'efficacité des dispositifs d'extraction de chaleur d'eaux usées, en envisageant de ne leur délivrer que des eaux usées dont la température dépasse une température prédéterminée.

Pour cela, l'invention comprend un canal d'écoulement (110) et un élément expansible (120). L'élément expansible (120) est disposé à l'intérieur du canal d'écoulement (110) de manière à servir de déflecteur pour modifier une direction d'écoulement, D, du liquide, en fonction de sa température, de sorte que le liquide s'écoule seulement vers l'un des orifices de sortie de liquide (11, 12) du canal d'écoulement (110).

## Description

### Domaine technique

L'invention concerne le domaine des procédés ou moyens pour agir sur l'écoulement des liquides. En particulier, il concerne un dispositif passif et un système passif pour la discrimination de liquide selon la température.

### Technique antérieure

L'accessibilité à l'eau est un problème récurrent qui conduit au développement de solutions de recyclage des eaux usées.

Par exemple, on peut substituer les eaux usées à l'eau potable dans des applications pour lesquelles une moindre qualité est suffisante, dans les domaines tels que l'irrigation agricole, la protection incendie ou la récupération de chaleur.

Dans ce dernier cas, on connait des dispositifs capables d'extraire l'énergie calorifique des eaux usées. Le principe de fonctionnement de ces dispositifs consiste à diriger des eaux usées qui présentent des températures au-delà d'une température prédéterminée, vers une cuve d'échange thermique qui est associée à une pompe à chaleur.

Or, les eaux usées ont la particularité de présenter une température variable ou imprévisible dans le temps.

Ainsi, afin d'améliorer l'efficacité des dispositifs d'extraction de chaleur d'eaux usées, on pourrait envisager de ne leur délivrer que des eaux usées dont la température dépasse la température prédéterminée. Toutefois, les eaux usées dont la température se trouve en dessous de la température prédéterminée devraient également pouvoir être valorisées.

Il existe donc un besoin pour un dispositif capable de discriminer des eaux usées selon leur température.

### Résumé de l'invention

L'invention vise à résoudre, au moins partiellement, ce besoin.

L'invention vise en particulier un discriminateur passif de liquide qui comprend :
- un canal d'écoulement qui comprend au moins un orifice d'admission de liquide et deux orifices de sortie de liquide, et
- un élément expansible qui est déformable de manière réversible et bidirectionnelle entre une première forme, lors de son exposition à une température qui se situe en deçà d'une première température prédéterminée, et une deuxième forme, lors de son exposition à une température qui se situe au-delà d'une deuxième température prédéterminée, la deuxième température prédéterminée étant sensiblement supérieure à la première température prédéterminée.

Par ailleurs, dans le discriminateur passif de liquide selon l'invention,
- l'orifice d'admission de liquide est agencé pour entrer en communication liquide avec une conduite d'alimentation adaptée pour délivrer un liquide qui présente une température variable ou imprévisible dans le temps,
- le canal d'écoulement est agencé pour faire circuler le liquide dans une direction d'écoulement, depuis l'orifice d'admission de liquide vers les orifices de sortie de liquide, sous la forme d'une couche de liquide dont la surface est essentiellement continue, et
- l'élément expansible est agencé à l'intérieur du canal d'écoulement, immédiatement en amont des deux orifices de sortie de liquide, de manière à être exposé au liquide, et de manière à servir de déflecteur pour modifier la direction d'écoulement du liquide, de sorte que le liquide s'écoule seulement vers l'un des orifices de sortie de liquide.

En particulier,
- le canal d'écoulement comprend une partie d'admission horizontale agencée pour entrer en communication liquide avec l'orifice d'admission de liquide et une partie de discrimination de liquide verticale agencée pour entrer en communication liquide avec, d'une part, la partie d'admission horizontale, et d'autre part, les deux orifices de sortie de liquide,
- l'élément expansible est agencé à l'intérieur de la partie de discrimination de liquide verticale, et
- la partie de discrimination de liquide verticale présente une section axiale incurvée à convexité tournée vers la direction d'écoulement, de manière que le liquide forme une nappe de liquide qui ruisselle par gravité à l'intérieur de la partie de discrimination de liquide verticale, au moins partiellement sur l'élément expansible.

Dans un premier mode de réalisation, la partie de discrimination de liquide verticale comprend une partie supérieure et une partie inférieure qui sont complémentaires, indépendantes l'une de l'autre et sont montées en fixation amovible étanche.

Dans un deuxième mode de réalisation, la partie de discrimination de liquide verticale comprend, en outre, des moyens de centrage de liquide, agencés de sorte que le liquide ruisselle sur une partie centrale de l'élément expansible.

Dans un troisième mode de réalisation,
- la partie d'admission horizontale présente au moins une première section transversale et une deuxième section transversale différente de la première section transversale, la première section transversale étant sensiblement similaire à une section transversale de la conduite d'alimentation.

Dans un exemple du troisième mode de réalisation, le canal d'écoulement comprend en outre une partie de rallonge horizontale agencée pour être disposée entre la partie d'admission horizontale, et la partie de discrimination de liquide verticale,
et dans lequel la partie de rallonge horizontale présente une troisième section transversale qui est sensiblement similaire à la deuxième section transversale de la partie d'admission horizontale.

Dans un quatrième mode de réalisation, l'élément bilame présente une forme rectangulaire qui est orientée longitudinalement dans la direction d'écoulement.

Dans un cinquième mode de réalisation, l'élément bilame présente une forme oblongue qui est orientée longitudinalement dans la direction d'écoulement.

Dans un sixième mode de réalisation, l'élément bilame comprend au moins un orifice de passage qui est adapté pour être en prise et être traversé par une tige de maintien.

Dans un septième mode de réalisation, l'élément bilame comprend une pluralité de bilames qui présentent des bords périphériques, la pluralité de bilames étant agencée pour que des bords périphériques adjacents se chevauchent.

Dans un exemple du septième mode de réalisation, chacun de la pluralité de bilames présente une section transversale en forme de créneau de manière qu'au moins un bord périphérique de chaque bilame vient en butée contre un flanc d'au moins un bilame adjacent.

Dans une première mise en oeuvre de l'exemple du septième mode de réalisation, la section transversale en forme de créneau est d'allure générale trapézoïdale isocèle, dont la petite base forme le sommet du créneau.

Dans une deuxième mise en oeuvre de l'exemple du septième mode de réalisation, la section transversale en forme de créneau est d'allure générale rectangulaire, dont l'une des bases forme le sommet du créneau.

L'invention concerne également un système passif de discrimination de liquide comprenant :
- au moins un premier et un deuxième discriminateur passif de liquide selon l'invention,
   dans lequel,
- le premier et le deuxième discriminateur passif de liquide sont agencés en série, de manière que l'orifice d'admission de liquide du deuxième discriminateur passif de liquide est en communication liquide avec l'un des orifices de sortie de liquide du premier discriminateur passif de liquide, et
- la première température prédéterminée associée au premier discriminateur passif de liquide est différente de la première température prédéterminée associée au deuxième discriminateur passif de liquide, et/ou la deuxième température prédéterminée associée au premier discriminateur passif de liquide est différente de la deuxième température prédéterminée associée au deuxième discriminateur passif de liquide.

### Brève description des dessins

D'autres caractéristiques et avantages de l'invention seront mieux compris à la lecture de la description qui va suivre et en référence aux dessins annexés, donnés à titre illustratif et nullement limitatif.
[Fig. 1] La figure 1 représente une vue en perspective d'un discriminateur passif de liquide selon un mode de réalisation de l'invention.
[Fig. 2] La figure 2 représente une vue schématique en coupe d'un discriminateur passif selon une mise en œuvre particulière de l'invention.
[Fig. 3] La figure 3 représente une première photo d'une vue globale du discriminateur passif de la figure 2.
[Fig. 4] La figure 4 représente une deuxième photo d'une vue globale du discriminateur passif de la figure 2.
[Fig. 5] La figure 5 représente une première photo d'une vue partielle de la partie de discrimination du discriminateur passif de la figure 2.
[Fig. 6] La figure 6 représente une deuxième photo d'une vue partielle de la partie de discrimination du discriminateur passif de la figure 2.
[Fig. 7] La figure 7 représente une troisième photo d'une vue partielle de la partie de discrimination du discriminateur passif de la figure 2.
[Fig. 8] La figure 8 représente une quatrième photo d'une vue partielle de la partie de discrimination du discriminateur passif de la figure 2 selon une mise en œuvre particulière de l'invention.
[Fig. 9] La figure 9 représente un procédé de discrimination de liquide selon l'invention.
[Fig. 10] La figure 10 représente une vue schématique d'un système passif de discrimination de liquide selon une mise en œuvre particulière de l'invention.
Les figures ne respectent pas nécessairement les échelles, notamment en épaisseur, et ce à des fins d'illustration.

### Description des modes de réalisation

L'invention se rapporte à un discriminateur passif de liquide selon la température.

L'invention comprend un canal d'écoulement et un élément expansible. L'élément expansible est disposé à l'intérieur du canal d'écoulement de manière à servir de déflecteur pour modifier une direction d'écoulement du liquide, en fonction de sa température, de sorte que le liquide s'écoule seulement vers l'un des orifices de sortie de liquide du canal d'écoulement.

De manière classique, on peut former le discriminateur passif de liquide dans tout matériau adapté au traitement des liquides, tels que le polycarbonate, le polypropylène, le plastique de type ABS (acrylonitrile butadiène styrène), le plastique de type POM (polyoxyméthylène) ou le plastique de type PMMA (polyméthacrylate de méthyle).

Dans l'invention, le liquide présente une température variable ou imprévisible dans le temps.

Dans un exemple, le liquide est un flux d'eaux résiduaires, également appelées eaux usées.

On entend par eau résiduaire, l'eau qui a fait l'objet d'une utilisation domestique, agricole et/ou industrielle. On parle alors respectivement d'eaux usées domestiques, d'eaux usées agricoles et d'eaux usées industrielles.

En particulier, les eaux usées domestiques (appelées aussi « eaux résiduaires domestiques », ERD) comprennent les eaux usées qui proviennent des établissements et services résidentiels et qui sont produites essentiellement par le métabolisme humain et les activités ménagères. Dans ce cadre, on distingue les eaux ménagères (appelées aussi « eaux grises ») qui sont issues des activités ménagères (p. ex. lessive, cuisine, douches, bains), des «eaux vannes » (appelées aussi « eaux noires ») qui sont issues du métabolisme humain (p. ex. toilettes, urinoirs).

Les eaux agricoles usées, quant à elles, comprennent toutes les eaux usées qui proviennent de l'exploitation agricole, autres que les eaux usées domestiques, les eaux industrielles et les eaux de ruissellement. Par exemple, il peut s'agir d'eaux issues de l'irrigation agricole.

Enfin, les eaux industrielles comprennent toutes les eaux usées qui proviennent de locaux utilisés à des fins commerciales ou industrielles, autres que les eaux usées domestiques, les eaux agricoles et les eaux de ruissellement. Par exemple, il peut s'agir de condensats de vapeur d'eau ou d'eaux de lavage.

Bien sûr, l'invention s'applique également à tout autre type de liquide qui présente une température variable ou imprévisible dans le temps, et ce, sans nécessiter de modifications substantielles de l'invention.

Dans l'invention, le discriminateur passif de liquide 100 comprend un canal d'écoulement 110 et un élément expansible 120.

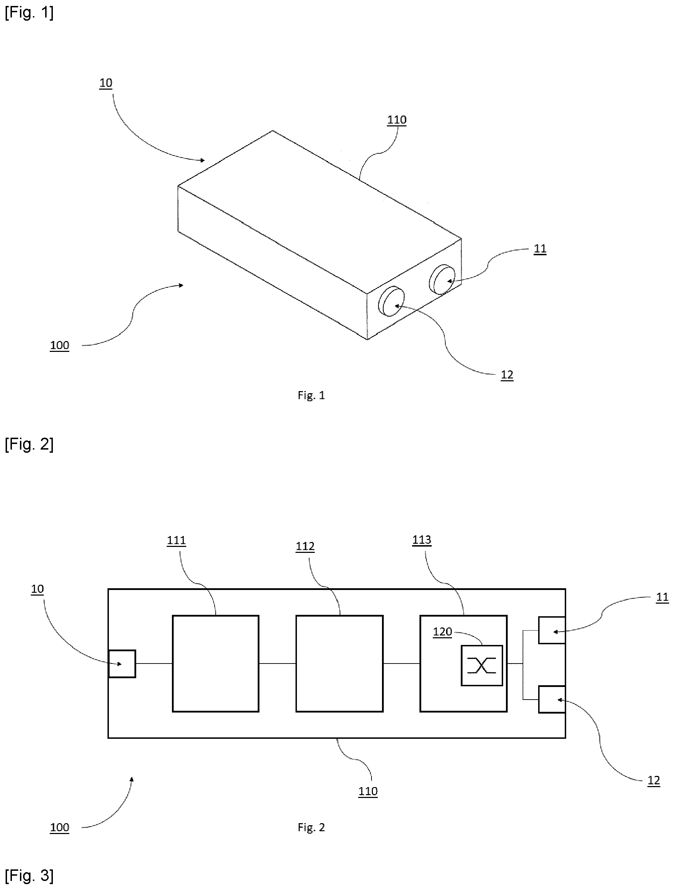

Dans la figure 1, le canal d'écoulement 110 comprend au moins un orifice d'admission de liquide 10 et deux orifices de sortie de liquide 11, 12.

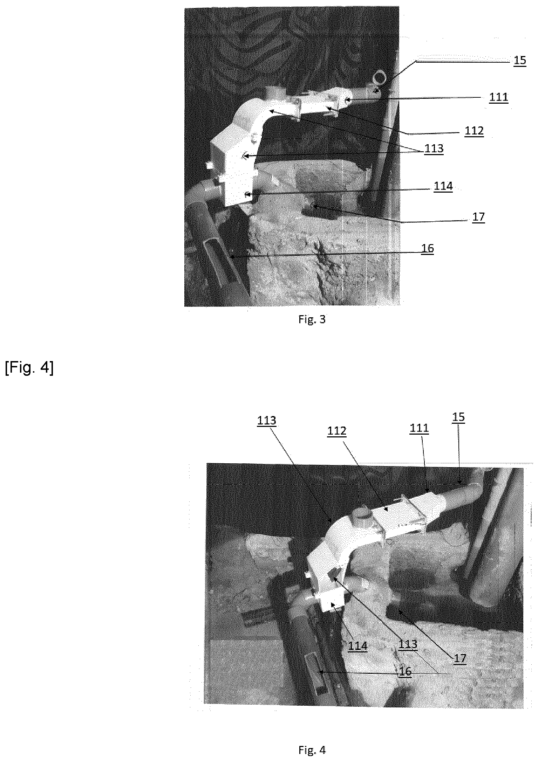

L'orifice d'admission de liquide 10 est agencé pour entrer en communication liquide avec une conduite d'alimentation 15 (cf. figure 3 et figure 4) adaptée pour délivrer un liquide qui présente une température variable ou imprévisible dans le temps.

Ensuite, le canal d'écoulement 110 est agencé pour faire circuler le liquide dans une direction d'écoulement D, depuis l'orifice d'admission de liquide 10 vers les orifices de sortie de liquide 11, 12, sous la forme d'une couche de liquide dont la surface est essentiellement continue.

De préférence, la couche de liquide présente une épaisseur sensible constante. Dans un exemple, le canal d'écoulement 110 comprend une lame (non illustrée) qui est agencée à l'intérieur du canal d'écoulement 110 pour réguler l'épaisseur de couche de liquide. Par exemple, on pourra fixer une telle lame à une paroi supérieure interne du canal d'écoulement 110.

Dans une mise en œuvre particulière, comme illustré sur les figures 2 à 4 et 8, le canal d'écoulement 110 comprend une partie d'admission horizontale 111, une partie de rallonge horizontale 112 et une partie de discrimination de liquide verticale 113.

En pratique, chacun parmi la partie d'admission horizontale 111, la partie de rallonge horizontale 112 et la partie de discrimination de liquide verticale 113, présente deux extrémités opposées, éventuellement axialement opposées.

En outre, la partie d'admission horizontale 111 est agencée pour entrer en communication liquide avec, d'une part, l'orifice d'admission de liquide 10, et d'autre part, la partie de rallonge horizontale 112.

Par ailleurs, la partie de rallonge horizontale 112 est agencée pour entrer en communication liquide avec, d'une part, la partie d'admission horizontale 111, et d'autre part, la partie de discrimination de liquide verticale 113.

Enfin, la partie de discrimination de liquide verticale 113 est agencée pour entrer en communication liquide avec, d'une part, la partie de rallonge horizontale 112, et d'autre part, les deux orifices de sortie de liquide 11, 12.

Dans une première variante de cette mise en œuvre particulière, comme illustrée dans la figure 3 et la figure 4, la partie d'admission horizontale 111 présente au moins une première section transversale et une deuxième section transversale différente de la première section transversale.

Cet agencement particulier de la partie d'admission horizontale 111 qui présente une section transversale qui est formée par la juxtaposition d'au moins deux sections transversales différentes favorise la modification de la géométrie du liquide, et notamment, la réduction de l'épaisseur du liquide.

En particulier, dans cette première variante, la première section transversale est sensiblement similaire à une section transversale de la conduite d'alimentation 15.

Dans un exemple, la première section transversale est circulaire. Toutefois, on pourra envisager d'autres formes sans nécessiter de modifications substantielles de l'invention.

Par ailleurs, dans cette première variante, la partie de rallonge horizontale 112 présente une troisième section transversale qui est sensiblement similaire à la deuxième section transversale de la partie d'admission horizontale 111.

Dans un exemple, la deuxième section transversale et la troisième section transversale sont rectangulaires. Toutefois, on pourra envisager d'autres formes sans nécessiter de modifications substantielles de l'invention.

La partie de rallonge horizontale 112 est configurée pour calmer le liquide qui provient de la partie d'admission horizontale 111, de manière à former une couche de liquide dont la surface est essentiellement continue et qui présente une épaisseur sensible constante, comme indiqué plus haut, et ce, même à fort débit.

Dans une deuxième variante de cette mise en œuvre particulière, l'élément expansible 120 est agencé à l'intérieur de la partie de discrimination de liquide verticale 113.

Dans une première mise en œuvre, on fixe l'élément expansible 120 contre une paroi interne de la partie de discrimination de liquide verticale 113 ou du canal d'écoulement 110 par vissage.

Dans une deuxième mise en œuvre, on fixe l'élément expansible 120 contre une paroi interne de la partie de discrimination de liquide verticale 113 ou du canal d'écoulement 110 par collage.

Dans une troisième mise en œuvre, on fixe l'élément expansible 120 contre une paroi interne de la partie de discrimination de liquide verticale 113 ou du canal d'écoulement 110 par friction.

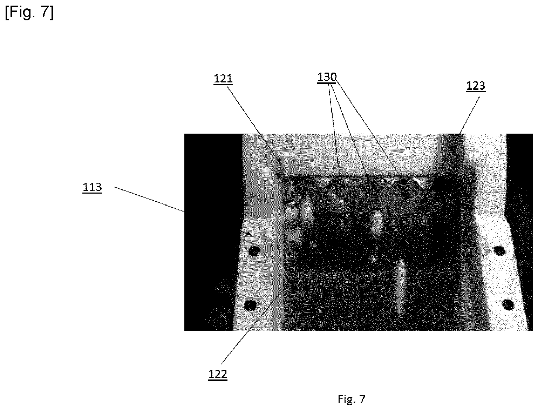

Dans un exemple des trois précédentes mises en œuvre, comme illustré sur la figure 7, l'élément expansible 120 présente au moins un orifice de passage qui est adapté pour être en prise et être traversé par une tige de maintien 130. Dans cet exemple, la prise de la tige de maintien avec l'orifice de passage peut être réalisée par friction, collage ou vissage. En outre, la tige de maintien peut être agencée pour dépasser légèrement d'au moins un côté de l'orifice de passage.

Dans un premier exemple, la paroi interne est une paroi inférieure interne de la partie de discrimination de liquide verticale 113 ou du canal d'écoulement 110.

Dans un deuxième exemple, la paroi interne est une paroi latérale interne de la partie de discrimination de liquide verticale 113 ou du canal d'écoulement 110.

Par ailleurs, comme illustrée dans la figure 3 et la figure 4, la partie de discrimination de liquide verticale 113 présente une section axiale incurvée à convexité tournée vers la direction d'écoulement D.

Avec un tel agencement de la partie de discrimination de liquide verticale 113, le liquide forme alors une nappe de liquide qui ruisselle par gravité à l'intérieur de la partie de discrimination de liquide verticale 113, au moins partiellement sur l'élément expansible 120.

Dans une mise en œuvre particulière, la partie de discrimination de liquide verticale 113 comprend des moyens de centrage de liquide, agencés de sorte que le liquide ruisselle sur une partie centrale de l'élément expansible 120.

Dans un exemple, les moyens de centrages de liquide sont des ergots.

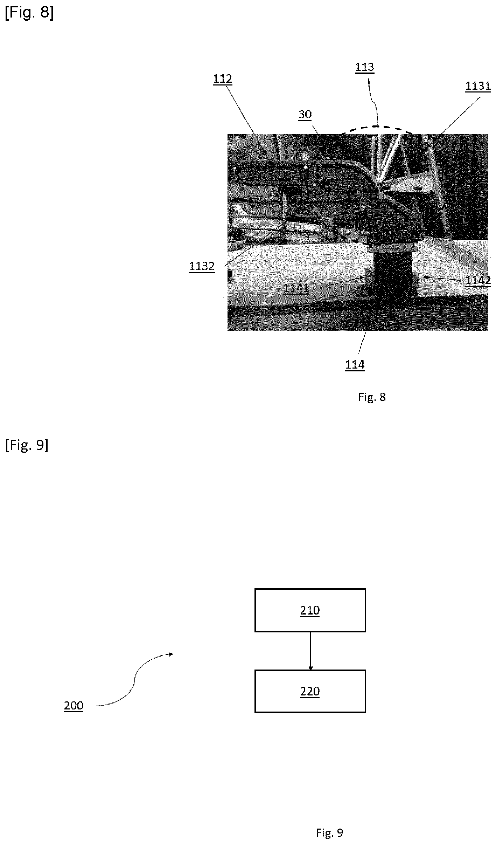

Dans une autre mise en œuvre particulière, comme illustré sur la figure 8, on réalise la partie de discrimination de liquide verticale 113 en deux parties. Dans ce cas, la partie de discrimination de liquide verticale 113 comprenant une partie supérieure 1131 et une partie inférieure 1132 qui sont complémentaires, indépendantes l'une de l'autre et sont montées en fixation amovible étanche. Dans l'exemple de la figure 8, on positionne les fixations amovibles, de type connu, au niveau des rebords périphériques des parties supérieure 1131 et inférieure 1132. Avec un tel agencement, on peut aisément démonter la partie de discrimination de liquide verticale 113, par exemple pour remplacer l'élément expansible 120.

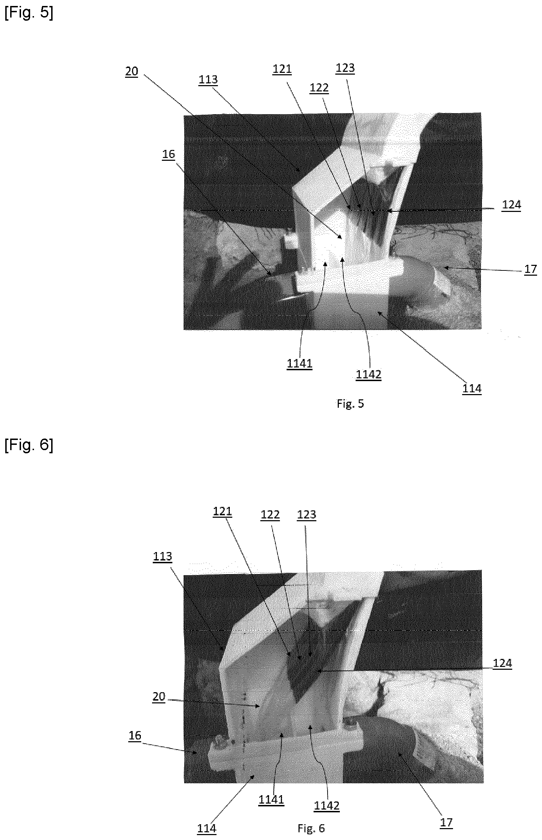

Dans l'invention, l'élément expansible 120 est déformable de manière réversible et bidirectionnelle. En particulier, comme illustrée dans la figure 5 et la figure 6, la déformation de l'élément expansible 120 se produit entre une première forme (cf. la figure 5), lors de son exposition à une température qui se situe en deçà d'une première température prédéterminée, et une deuxième forme (cf. la figure 6), lors de son exposition à une température qui se situe au-delà d'une deuxième température prédéterminée. En outre, la deuxième température prédéterminée est sensiblement supérieure à la première température prédéterminée.

Dans une première mise en œuvre, la première forme est choisie parmi : une droite à pente nulle, une droite à pente négative, une droite à pente positive.

Toutefois, on pourra envisager d'autres formes sans nécessiter de modifications substantielles de l'invention. Par exemple, on pourra choisir la première forme parmi l'une des formes envisagées ci-dessous pour la deuxième forme.

Dans une deuxième mise en œuvre, la deuxième forme est choisie parmi : une forme courbée, une forme en point d'interrogation inversé sans point, une forme de faucille, une forme en demi S, une forme en S, une forme en U inversé, une forme semi-circulaire, une forme concave, une forme convexe, un coude à 45° et un coude à 90°.

Toutefois, on pourra envisager d'autres formes sans nécessiter de modifications substantielles de l'invention. Par exemple, on pourra choisir la deuxième forme parmi l'une des formes envisagées ci-dessus pour la première forme.

En outre, dans l'invention, l'élément expansible 120 est agencé à l'intérieur du canal d'écoulement 110, immédiatement en amont des deux orifices de sortie de liquide 11, 12, de manière à être exposé au liquide, et de manière à servir de déflecteur pour modifier la direction d'écoulement D de sorte que le liquide s'écoule seulement vers l'un des orifices de sortie de liquide 11, 12.

Ainsi, comme illustré sur la figure 5 et la figure 6, l'élément expansible 120 est configuré pour passer de manière réversible d'une première forme (cf. la figure 5) à une deuxième forme (cf. la figure 6). Par ailleurs, le passage de l'élément expansible 120 à la première forme autorise le liquide à s'écouler seulement vers l'un des orifices de sortie de liquide 11, 12. Cependant, le passage de l'élément expansible 120 à la deuxième forme autorise le liquide à s'écouler seulement vers l'autre orifice de sortie de liquide 11, 12.

Par ailleurs, on notera que dans l'invention, l'élément expansible 120, nécessite au moins deux températures de fonctionnement différentes pour se déformer entre la première forme à la deuxième forme, c'est-à-dire pour réaliser une déflexion. La première température prédéterminée est dite de déclenchement, tandis que la deuxième température prédéterminée est dite de réarmement.

Dans l'invention, on choisira de préférence un réarmement automatique et avec une déflexion brusque de l'élément expansible 120. Toutefois, selon les applications envisagées, le réarmement pourra être manuel et/ou la déflexion progressive, par exemple, en fonction d'une plage de températures.

Dans une mise en œuvre particulière, l'élément expansible 120 est un élément bilame.

Pour rappel, un bilame comprend au moins deux bandes minces de métaux qui présentent des coefficients de dilation linéique différents. Ces bandes sont intimement liées entre elles sur toute leur surface de contact par placage (à froid ou à température élevée). De manière générale, un bilame se présente sous l'aspect d'une bande métallique unique. Ainsi, sous l'effet de changements de température (chauffe ou refroidissement), des tensions prennent naissance dans le bilame du fait des différences de dilatation entre les deux bandes, de sorte que le bilame est incurvé. En pratique, la courbure existe non seulement dans le sens longitudinal, mais aussi dans le sens transversal. Ainsi, on choisit généralement la longueur de la bande de sorte qu'elle est suffisamment grande par rapport à sa largeur (p. ex. un rapport de 10) pour que la courbure longitudinale ne soit pas contrariée par des déformations latérales.

Dans un premier exemple de cette mise en œuvre particulière, l'élément bilame présente une forme oblongue qui est orientée longitudinalement dans la direction d'écoulement D.

Dans un deuxième exemple de cette mise en œuvre particulière, l'élément bilame présente une forme rectangulaire qui est orientée longitudinalement dans la direction d'écoulement D.

Dans une première variante de cette mise en œuvre particulière (non illustrée), l'élément bilame comprend un seul bilame.

Dans une deuxième variante de cette mise en œuvre particulière, comme illustré sur la figure 5 et la figure 6, l'élément bilame 120 comprend une pluralité de bilames 121, 122, 123, 124.

En particulier, dans cette variante, chacun de la pluralité de bilames 121, 122, 123, 124 présentent des bords périphériques longitudinaux. Par ailleurs, la pluralité de bilames 121, 122, 123, 124 est agencée pour que des bords périphériques adjacents se chevauchent.

Dans un exemple de cette variante (non illustrée), chacun de la pluralité de bilames 121, 122, 123, 124 présente une section transversale en forme de créneau de manière qu'au moins un bord périphérique de chaque bilame vient en butée contre un flanc d'au moins un bilame adjacent.

Dans un premier cas particulier de cet exemple, la section transversale en forme de créneau est d'allure générale rectangulaire, dont l'une des bases forme le sommet du créneau.

Dans un deuxième cas particulier de cet exemple, la section transversale en forme de créneau est d'allure générale trapézoïdale isocèle, dont la petite base forme le sommet du créneau.

Afin de faciliter la compréhension de l'invention, conformément à la figure 9, on décrit ci-après un exemple de procédé 200 de fonctionnement d'un discriminateur passif de liquide 100 selon l'invention, comme illustré sur la figure 3, la figure 4 et la figure 6.

Dans cet exemple, on envisage une utilisation ménagère du discriminateur passif de liquide 100, dans laquelle le liquide correspond à des eaux ménagères 20. Par ailleurs, on envisage un élément expansible 120 à réarmement automatique et déflexion brusque. Aussi, on considère que l'élément expansible 120 comprend une pluralité de bilames 121, 122, 123, 124. En outre, la première température prédéterminée de fonctionnement de l'élément expansible 120 s'élève à 20 °C tandis que sa deuxième température prédéterminée de fonctionnement s'élève à 35 °C. On considère aussi que la première forme de l'élément expansible 120 est une droite à pente nulle alors que la deuxième forme de l'élément expansible 120 est un coude à 45°. Enfin, on envisage la mise en œuvre de l'invention, dans laquelle le canal d'écoulement 110 comprend une partie d'admission horizontale 111, une partie de rallonge horizontale 112 et une partie de discrimination de liquide verticale 113. En particulier, on considère que la première section transversale et une deuxième section transversale de la partie d'admission horizontale 111 sont respectivement circulaire et rectangulaire.

Dans une première étape 210, on fournit un discriminateur passif de liquide 100 que l'on positionne entre une conduite d'alimentation 15 et un répartiteur de liquide 114. Dans cette première étape, on a préalablement fermé la conduite d'alimentation 15 de sorte qu'elle ne puisse pas délivrer d'eaux ménagères 20.

En pratique, on met en communication liquide l'orifice d'admission de liquide 10 du canal d'écoulement 110 avec la conduite d'alimentation 15. Ensuite, on dispose le répartiteur de liquide 114 en aval de l'extrémité libre du discriminateur passif de liquide 100. Dans un exemple, le répartiteur de liquide 114 comprend une paroi qui sépare le répartiteur de liquide 114 en deux zones ouvertes 1141, 1142 de récupération de liquide. Par ailleurs, on dispose les deux orifices de sortie de liquide 11, 12 du canal d'écoulement 110, de sorte que chacun débouche seulement dans l'une des zones ouvertes 1141, 1142 du répartiteur de liquide 114.

Dans cette première étape 210, comme illustré sur la figure 5, l'élément expansible 120 est dans sa première forme, de sorte que des eaux usées qui circuleraient dans le canal d'écoulement 110 déboucheraient seulement dans l'une des zones ouvertes 1141, 1142 de récupération de liquide du répartiteur de liquide 114.

Dans une deuxième étape 220, on ouvre la conduite d'alimentation 15 qui commence à délivrer des eaux ménagères 20. Ces dernières s'écoulent alors dans la partie d'admission horizontale 111 qui modifie leur géométrie, et notamment, leur épaisseur. Ensuite, les eaux ménagères 20 s'écoulent hors de la partie d'admission horizontale 111 pour entrer dans la partie de rallonge horizontale 112 qui les calme et forme une couche d'eaux ménagères 20 dont la surface est essentiellement continue et qui présente une épaisseur sensible constante. Par la suite, la couche d'eaux ménagères 20 s'écoule hors de la partie de rallonge horizontale 112 pour entrer dans la partie de discrimination de liquide verticale 113, dans lequel la pluralité de bilames 121, 122, 123, 124 sert de déflecteur pour modifier la direction d'écoulement D de la couche d'eaux ménagères 20, de sorte que la couche d'eaux ménagères 20 s'écoule seulement vers l'un des orifices de sortie de liquide 11, 12.

Ainsi, dans cet exemple, tant que la température de la couche d'eaux ménagères 20 est inférieure à 35 °C, celle-ci s'écoule seulement vers l'une des zones ouvertes 1141, 1142 du répartiteur de liquide 114, dite zone froide, qui est en communication liquide avec une première conduite d'évacuation 16. On sera dans ce cas de figure, si les eaux ménagères 20 comprennent principalement de l'eau potable froide ou tiède que l'on aura fait couler, par exemple, dans un lavabo. Puis, lorsque la température dépasse 35 °C, l'élément expansible 120 passe de sa première forme (cf. la figure 5) à sa deuxième forme (cf. la figure 6).

En d'autres termes, au cours de cette étape 220, comme illustré sur la figure 6, tout ou partie de la pluralité de bilames 121, 122, 123, 124 passe d'une forme de droite à pente nulle à une forme de coude à 45°. On sera dans ce cas de figure, si les eaux ménagères 20 comprennent principalement de l'eau chaude qui provient, par exemple, d'un bac de douche, d'une machine à laver le linge ou d'une machine à laver la vaisselle. Alors, la couche d'eaux ménagères 20 s'écoule seulement vers l'autre zone ouverte du répartiteur de liquide 114, dite zone chaude, qui est en communication liquide avec une deuxième conduite d'évacuation 17. Ensuite, tant que la température de la couche d'eaux ménagères 20 est supérieure à 20 °C, celle-ci s'écoule seulement vers la zone chaude du répartiteur de liquide 114. Par la suite, lorsque la température descend en dessous de 20 °C, l'élément expansible 120 passe de sa deuxième forme à sa première forme de sorte que la couche d'eaux ménagères 20 s'écoule seulement vers la zone froide, et ainsi de suite.

L'invention est particulièrement fiable, simple à mettre en œuvre et à maintenir, car seul l'élément expansible 120 pourrait être changé lorsqu'il perd ses propriétés de déflexion. Par ailleurs, l'invention ne nécessite pas de source énergétique, par exemple électrique, pour fonctionner, ni de moyens de commande supplémentaires.

L'invention concerne également un système passif 300 de discrimination de liquide.

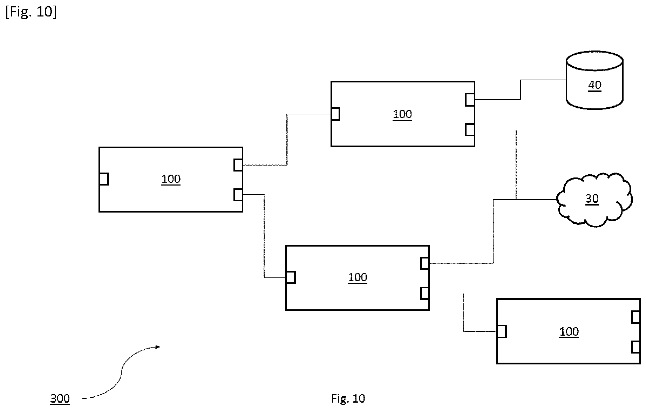

Dans la figure 10, le système passif 300 de discrimination de liquide comprend au moins un premier et un deuxième discriminateur passif de liquide 100, comme décrit ci-dessus.

En particulier, le premier et le deuxième discriminateur passif de liquide 100 sont agencés en série, de manière que l'orifice d'admission de liquide 10 du deuxième discriminateur passif de liquide 100 entre en communication liquide avec l'un des orifices de sortie de liquide 11, 12 du premier discriminateur passif de liquide 100. En outre, par exemple, on pourra coupler l'autre orifice de sortie de liquide 11, 12 qui n'est pas entré en communication liquide avec un discriminateur passif de liquide 100, avec un réseau d'évacuation de liquide 30 ou avec une cuve de récupération de liquide 40.

Par ailleurs, dans l'invention, les températures de fonctionnement de deux discriminateurs passifs de liquide 100 agencés en série sont différentes.

En particulier, dans l'exemple de la figure 10, la première température prédéterminée associée au premier discriminateur passif de liquide 100 est différente de la première température prédéterminée associée au deuxième discriminateur passif de liquide 100, et/ou la deuxième température prédéterminée associée au premier discriminateur passif de liquide 100 est différente de la deuxième température prédéterminée associée au deuxième discriminateur passif de liquide 100.

Avec un tel agencement du système passif 300 de discrimination de liquide, on peut discriminer le liquide en plusieurs liquides de températures différentes. Pour cela, on pourra avantageusement disposer en série de nombreux discriminateurs passifs de liquide 100 selon l'invention et ajuster les températures de fonctionnement de chacun.

L'invention peut faire l'objet de nombreuses variantes et applications autres que celles décrites ci-dessus. En particulier, sauf indication contraire, les différentes caractéristiques structurelles et fonctionnelles de chacune des mises en œuvre décrite ci-dessus ne doivent pas être considérées comme combinées et/ou étroitement et/ou inextricablement liées les unes aux autres, mais au contraire, comme de simples juxtapositions. En outre, les caractéristiques structurelles et/ou fonctionnelles des différents modes de réalisation décrits ci-dessus peuvent faire l'objet en tout ou partie de toute juxtaposition différente ou de toute combinaison différente.

Par exemple, dans un premier mode de réalisation de la mise en œuvre particulière de la figure 2, la partie d'admission horizontale 111 et la partie de rallonge horizontale 112 forment une seule pièce unique qui est agencée pour entrer en communication liquide avec la partie de discrimination de liquide verticale 113.

Par exemple, dans un deuxième mode de réalisation de la mise en œuvre particulière de la figure 2, le canal d'écoulement 110 ne comprend pas la partie de rallonge horizontale 112 de sorte que la partie d'admission horizontale 111 est agencée pour entrer en communication liquide avec la partie de discrimination de liquide verticale 113.

## Revendications

1. Discriminateur passif de liquide (100) comprenant :
- un canal d'écoulement (110) qui comprend au moins un orifice d'admission de liquide (10) et deux orifices de sortie de liquide (11, 12), et
- un élément expansible (120) qui est déformable de manière réversible et bidirectionnelle entre une première forme, lors de son exposition à une température qui se situe en deçà d'une première température prédéterminée, et une deuxième forme, lors de son exposition à une température qui se situe au-delà d'une deuxième température prédéterminée, la deuxième température prédéterminée étant sensiblement supérieure à la première température prédéterminée,
dans lequel,
- l'orifice d'admission de liquide (10) est agencé pour entrer en communication liquide avec une conduite d'alimentation (15) adaptée pour délivrer un liquide qui présente une température variable ou imprévisible dans le temps,
- le canal d'écoulement (110) est agencé pour faire circuler le liquide dans une direction d'écoulement, D, depuis l'orifice d'admission de liquide (10) vers les orifices de sortie de liquide (11, 12), sous la forme d'une couche de liquide dont la surface est essentiellement continue, et
- l'élément expansible (120) est agencé à l'intérieur le canal d'écoulement (110), immédiatement en amont des deux orifices de sortie de liquide (11, 12), de manière à être exposé au liquide, et de manière à servir de déflecteur pour modifier la direction d'écoulement, D, du liquide, de sorte que le liquide s'écoule seulement vers l'un des orifices de sortie de liquide (11, 12),
et dans lequel,
- le canal d'écoulement (110) comprend une partie d'admission horizontale (111) agencée pour entrer en communication liquide avec l'orifice d'admission de liquide (10) et une partie de discrimination de liquide verticale (113) agencée pour entrer en communication liquide avec, d'une part, la partie d'admission horizontale (111), et d'autre part, les deux orifices de sortie de liquide (11, 12),
- l'élément expansible (120) est agencé à l'intérieur la partie de discrimination de liquide verticale (113), et
- la partie de discrimination de liquide verticale (113) présente une section axiale incurvée à convexité tournée vers la direction d'écoulement, D, de manière que le liquide forme une nappe de liquide qui ruisselle par gravité à l'intérieur de la partie de discrimination de liquide verticale (113), au moins partiellement sur l'élément expansible (120).

2. Discriminateur passif de liquide (100) selon la revendication 1 dans lequel la partie de discrimination de liquide verticale (113) comprend une partie supérieure (1131) et une partie inférieure (1132) qui sont complémentaires, indépendantes l'une de l'autre et sont montées en fixation amovible étanche.

3. Discriminateur passif de liquide (100) selon l'une quelconque des revendications 1 à 2 dans lequel la partie de discrimination de liquide verticale (113) comprend, en outre, des moyens de centrage de liquide, agencés de sorte que le liquide ruisselle sur une partie centrale de l'élément expansible (120).

4. Discriminateur passif de liquide (100) selon l'une quelconque des revendications 1 à 3 dans lequel
- la partie d'admission horizontale (111) présente au moins une première section transversale et une deuxième section transversale différente de la première section transversale, la première section transversale étant sensiblement similaire à une section transversale de la conduite d'alimentation (15).

5. Discriminateur passif de liquide (100) selon la revendication 4, dans lequel le canal d'écoulement (110) comprend en outre une partie de rallonge horizontale (112) agencée pour être disposée entre la partie d'admission horizontale (111), et la partie de discrimination de liquide verticale (113),
et dans lequel la partie de rallonge horizontale (112) présente une troisième section transversale qui est sensiblement similaire à la deuxième section transversale de la partie d'admission horizontale (111).

6. Discriminateur passif de liquide (100) selon l'une quelconque des revendications 1 à 5, dans lequel l'élément bilame présente une forme rectangulaire qui est orientée longitudinalement dans la direction d'écoulement, D.

7. Discriminateur passif de liquide (100) selon l'une quelconque des revendications 1 à 5, dans lequel l'élément bilame présente forme oblongue qui est orientée longitudinalement dans la direction d'écoulement, D.

8. Discriminateur passif de liquide (100) selon l'une quelconque des revendications 1 à 7, dans lequel l'élément bilame comprend au moins un orifice de passage qui est adapté pour être en prise et être traversé par une tige de maintien (130).

9. Discriminateur passif de liquide (100) selon l'une quelconque des revendications 1 à 8, dans lequel l'élément bilame comprend une pluralité de bilames (121, 122, 123, 124) qui présentent des bords périphériques, la pluralité de bilames (121, 122, 123, 124) étant agencée pour que des bords périphériques adjacents se chevauchent.

10. Discriminateur passif de liquide (100) selon la revendication 9 dans lequel chacun de la pluralité de bilames (121, 122, 123, 124) présente une section transversale en forme de créneau de manière qu'au moins un bord périphérique de chaque bilame vient en butée contre un flanc d'au moins un bilame adjacent.

11. Discriminateur passif de liquide (100) selon la revendication 10 dans lequel la section transversale en forme de créneau est d'allure générale trapézoïdale isocèle, dont la petite base forme le sommet du créneau.

12. Discriminateur passif de liquide (100) selon la revendication 10 dans lequel la section transversale en forme de créneau est d'allure générale rectangulaire, dont l'une des bases forme le sommet du créneau.

13. Système passif de discrimination de liquide (300) comprenant :
- au moins un premier et un deuxième discriminateur passif de liquide (100) selon l'une quelconque des revendications 1 à 12,
dans lequel,
- le premier et le deuxième discriminateur passif de liquide (100) sont agencés en série, de manière que l'orifice d'admission de liquide (10) du deuxième discriminateur passif de liquide (100) est en communication liquide avec l'un des orifices de sortie de liquide (11, 12) du premier discriminateur passif de liquide (100), et
- la première température prédéterminée associée au premier discriminateur passif de liquide (100) est différente de la première température prédéterminée associée au deuxième discriminateur passif de liquide (100), et/ou la deuxième température prédéterminée associée au premier discriminateur passif de liquide (100) est différente de la deuxième température prédéterminée associée au deuxième discriminateur passif de liquide (100).
